(19) Europäisches Patentamt / European Patent Office / Office européen des brevets

(11) EP 2 963 379 B1

(12) EUROPEAN PATENT SPECIFICATION

(45) Date of publication and mention of the grant of the patent:
**31.05.2017 Bulletin 2017/22**

(21) Application number: **14756270.6**

(22) Date of filing: **17.01.2014**

(51) Int Cl.:
*G01B 11/00* *(2006.01)*    *G01D 5/34* *(2006.01)*

(86) International application number:
**PCT/JP2014/050811**

(87) International publication number:
**WO 2014/132696 (04.09.2014 Gazette 2014/36)**

(54) **POSITION DETECTOR**

POSITIONSDETEKTOR

DÉTECTEUR DE POSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2013 JP 2013035928**

(43) Date of publication of application:
**06.01.2016 Bulletin 2016/01**

(73) Proprietor: **Azbil Corporation**
**Chiyoda-ku**
**Tokyo 100-6419 (JP)**

(72) Inventor: **KAWASE, Shigeru**
**Tokyo 100-6419 (JP)**

(74) Representative: **Lavoix**
**Bayerstrasse 83**
**80335 München (DE)**

(56) References cited:
**WO-A2-2013/011249        JP-A- H08 501 879**
**JP-A- H09 105 607         JP-A- S52 134 752**
**JP-A- 2008 241 389        JP-A- 2014 025 756**
**JP-U- S5 729 805          US-A- 3 791 607**
**US-A- 4 011 447**

**Description**

Technical Field

This invention relates to position detectors that detect the position of, for example, actuators.

Background Art

In recent years, in manufacturing, various types of linear actuators have come to be used according to the usage at hand. For example, in the assembly and mounting of electronic parts, or in pick-and-place tasks, linear actuators with relatively fast response speeds are used. The range of motion of the above is approximately 1 cm to 10 cm, and precise work is achieved at high speed by performing feedback control of position using a position detector that suits the position precision and/or response speed.

Position detectors are classified as the analog type, digital encoder type, or the like based on its format, as well as as the magnetic or eddy current, differential transformer, potentiometer, or other type, based on the detection principle, and also as the contact type or non-contact type, transmission type, reflecting type, or the like, based on the constitution.

Examples of digital position detectors that use light are laser displacement gauges and digital scales. These digital position detectors have many advantages, such as the fact that they have high minimum resolution, the fact that there is no drift and the linearity is good as long as the scale is not deformed, and the fact that long stroke measurement is possible, and therefore they are commonly used in measurement instruments and devices that require high positioning precision. However, there are issues, such as the fact that the position detector itself is expensive, and an expensive, dedicated IC is required because the peripheral circuitry is complex.

In addition, there are digital scales that use magnetism, but they are similarly expensive, and compared to the optical format, they are more likely to be affected by noise generated when the actuator is driven with a large current.

Meanwhile, among the analog position detectors, those that use light include photointerrupters, which are the transmission type, and photoreflectors, which are the reflection type, and those that use magnetism include the Hall element, magnetic resistance element (AMR: anisotropic magnetoresistance), and giant magnetoresistance (GMR) element. Other types include those that use the eddy current principle or differential transformer principle (see, for example, Patent Literature 1).

Compared to the digital position detectors, analog position detectors are more likely to be affected by noise generated when the actuator is driven with a large current. However, the format that uses light is relatively unaffected by electromagnetic noise generated when an electric current is run through the coil of an actuator.

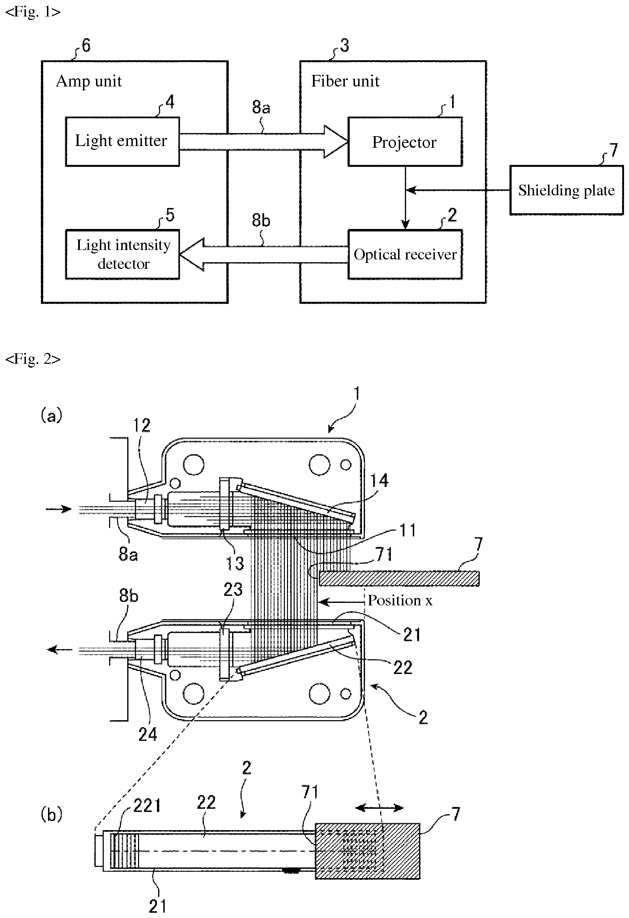

In particular, a light fiber-type position detector in which, as shown, for example, in Fig. 1, a fiber unit 3 made up of a projector 1 and optical receiver 2 and an amp unit 6 with a built-in light emitter 4 and light intensity detector 5 are separated from each other, and the fiber unit 3 and amp unit 6 are connected with light fibers 8a, 8b (hereinafter referred to as "fiber optic sensor") has the advantage of being completely unaffected by noise from current that drives the actuator, because the light sensor and amplifier can be installed in a location distant from the actuator coil.

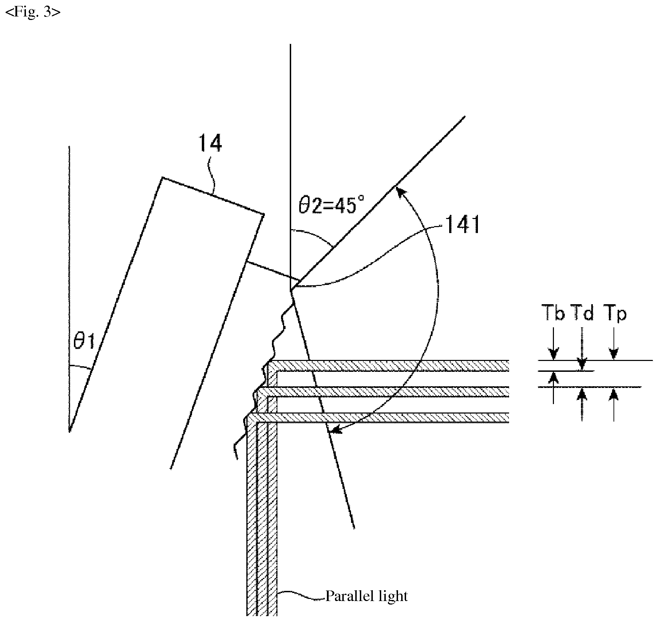

The fiber unit 3 of this fiber optic sensor is available as the transmission type and as the reflection type. As an example of this transmission type, there is one, as shown in Figs. 2 and 3, that is constituted of a projector 1 in which light from an optic fiber output end 12 installed inside is made into parallel light by means of a lens 13, the direction of that light is changed to the direction of the optical receiver 2 by means of a mirror array 14 (or prism array) that has small mirrors 141, and the light is projected from a projector window 11; and an optical receiver 2 that receives parallel light through a light-receiving window 21, in which the direction of that light is changed to the direction of a lens 23 by means of a mirror array 22 (or prism array) that has small mirrors 221, and focuses the parallel light onto the fiber incident end 24 by means of the lens 23.

In particular, a fiber unit 3 of the type that uses mirror arrays 14, 22 (notation of "prism array" is omitted hereinafter) is capable of creating parallel light with a great width using a simple constitution of only lenses 13, 23 and mirror arrays 14, 22. Furthermore, as shown in Fig. 2, by facing the projector 1 and optical receiver 2 toward each other and moving a shielding plate 7 between the two in the length direction of the windows 11, 21, the amount of light received by the optical receiver 2 changes in proportion to the position of the shielding plate 7. Therefore, the output of the amp unit 6 also changes in a proportion to the position of the shielding plate 7, and the position detector of this type can be used as a position detector with a relatively long detection distance.

Prior Art Literature

Patent Literature

Patent Literature 1: Japanese Unexamined Patent Application Publication H6-258139 US3791607 discloses a position detector comprising a projector and an optical receiver both having a window of the same size, the receiver receiving the light from the projector and a shielding plate between the two windows and covering all or part of the light transmitted from the projector to the receiver, the detector further comprising a light intensity detector and deflection means provided opposite at least one window to deflect the direction of the light, the deflection means comprising a plurality of deflection elements positioned in a given placement cycle.

Summary of the Invention

Problem to Be Solved by the Invention

Here, in order to make the depth of the projector 1 and optical receiver 2 small, the installation angle θ1 of the mirror arrays 14, 22 are generally set at an angle smaller than 45°, as shown in Fig. 3. Meanwhile, with mirror array 14, it is necessary to change the direction of parallel light from the lens 13 of the projector 1 to an approximately perpendicular direction for projection to the optical receiver 2, so the installation angle θ2 of the mirror 141 used to change the angle of the parallel light among the individual mirrors that constitute the mirror array 14 is made to be 45° relative to the parallel light from the lens 13.

Similarly, with the mirror array 22, it is necessary to change the direction of parallel light from the projector 1 to an approximately perpendicular direction for projection to the lens 23, so the installation angle θ2 of the mirror 221 (see Fig. 2 (b)) used to change the angle of the parallel light among the individual mirrors that constitute the mirror array 22 is made to be 45° relative to the parallel light from the projector 1.

However, when using mirror arrays 14, 22 constituted as noted above, the portion used for reflection of parallel light among the mirror arrays 14, 22 is less than half. Therefore, in the parallel light projected to the optical receiver 2 in an approximately perpendicular manner, there exists an area Tb with high light intensity and an area Td with very low light intensity, and this is repeated at a given cycle interval Tp.

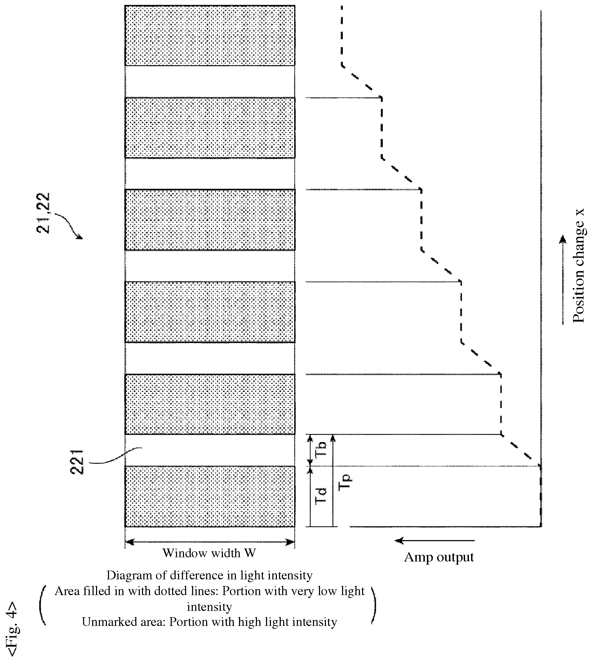

In this constitution, when a shielding plate 7 (see Fig. 2 (b)) that has an edge line 71 approximately parallel to the mirrors 141, 221 is moved linearly in the length direction, then as shown in Fig. 4, in the area Tb with high light intensity, the amount of light received by the optical receiver 2 increases in proportion to the change in position, and the output of the amp unit 6 also increases. However, in the area Td with very low light intensity, the amount of light received by the optical receiver 2 hardly increases, so there is no change in the output of the amp unit 6, either. Furthermore, this change in output is repeated at a given cycle interval Tp, so the output changes in a step-wise manner, even if the position of the shielding plate 7 is changed linearly.

Therefore, since there is an area in which the output hardly changes in response to linear change in position of the shielding plate 7, the position detector is in a state in which the resolution is very deteriorated (the level is such that it generally cannot be referred to as a position detector).

The actual light intensity changes continuously and not in a step-wise manner at the boundary between the area with high light intensity and the area with very low light intensity, due to the effects of diffraction caused by the shielding plate 7 and since a luminous flux of the optical system is not ideal parallel light. Therefore, the changes in output of the amp unit 6 do not actually occur in a step-wise manner, either.

However, since the effects of diffraction and luminous flux on the changes in output are not dominant, and since those effects tend not to manifest when the projector 1 and optical receiver 2 are placed at a relatively close distance, those effects are not discussed in this invention.

This invention was invented in order to solve problems such as those noted above, and its purpose is to provide a position detector that can make the cumulative change in light intensity resulting from movement of the shielding plate in the length direction of the window proportional to the distance travelled by the shielding plate, even if the parallel light projected into the light-receiving window has areas with high light intensity and areas with very low light intensity, and that is apparently operated in the same way as when the intensity of parallel light projected into the light-receiving window is uniform.

Means for Solving the Problem

A position detector according to the present invention, characterised in that it comprises: a projector having a window with a given width and a given length greater than said width, and which is adapted to project parallel light of a given width from said window; an optical receiver having a window with said given width and said given length, and which is adapted to receive said parallel light by means of said window; a shielding plate held in a horizontally mobile manner in the length direction of said window, and which is adapted to shield all or a part of the parallel light that enters the window of said optical receiver depending on the position of the subject of measurement; a light intensity detector adapted to output position signals with magnitude proportional to the intensity of light received by said optical receiver; and a deflection means provided opposite the window of at least one of the projector and the optical receiver, and which is adapted to change the direction of the parallel light to an approximately perpendicular direction relative to the window by means of a plurality of deflecting elements positioned in a given placement cycle, wherein the edge line of the shielding plate is approximately parallel to a line segment that connects the starting point of a placement cycle of a given deflection element at one end in the width direction of the window and the ending point of the placement cycle of a given deflection element at the other end in the width direction of the window, when viewing the deflection means from a direction approximately perpendicular to the window.

Effect of the Invention

According to the present invention, since the constitution was made to be as described above, it is possible to make the cumulative change in light intensity resulting from movement of the shielding plate in the length direction of the window proportional to the distance travelled by the shielding plate, even if the parallel light projected into the light-receiving window has areas with high light intensity and areas with very low light intensity, and the same effect is achieved as when the intensity of parallel light projected into the light-receiving window appears to be uniform.

Brief Explanation of the Drawings

[Fig. 1] A block diagram showing the entire constitution of the position detector.
[Fig. 2] Diagrams showing the projector, optical receiver, and shielding plate of a conventional position detector, where (a) is a side view and (b) is a partial top view of the optical receiver.
[Fig. 3] A diagram showing the constitution of the mirror array in the position detector.
[Fig. 4] A diagram showing amp output relative to change in position of the shielding plate in a conventional position detector
[Fig. 5] Diagrams showing the constitution of the projector, optical receiver, and shielding plate of a position detector according to Embodiment 1 of this invention, where (a) is a side view and (b) is a partial top view of the optical receiver.
[Fig. 6] A diagram showing the positional relationship between the mirror array and the edge line of the shielding plate, and the amp output relative to change in position of the shielding plate, of a position detector according to Embodiment 1 of this invention.
[Fig. 7] A diagram showing a case in which the inclination angle of the edge line of the shielding plate in Embodiment 1 of this invention was changed.
[Fig. 8] A diagram showing changes in Area S3 due to differences in the inclination angle of the edge line of the shielding plate in Embodiment 1 of this invention.
[Fig. 9] A diagram showing the positional relationship between the mirror array and the edge line of the shielding plate, in a position detector according to Embodiment 2 of this invention.
[Fig. 10] A diagram showing the positional relationship between the mirror array and the edge line of the shielding plate, in a position detector according to Embodiment 3 of this invention.

Embodiments of the Invention

In order to explain this invention in greater detail, embodiments of this invention are explained below in accordance with the attached drawings.
The overall constitution of the position detector according to Embodiment 1 of this invention, is like the conventional constitution, and as shown in Fig. 1, constituted of a fiber unit 3 made up of a projector 1 and optical receiver 2, an amp unit 6 with a built-in light emitter 4 and light intensity detector 5, and a shielding plate 7 that shields light projected from the projector 1 to the optical receiver 2. In addition, the fiber unit 3 and amp unit 6 are connected with light fibers 8a, 8b.

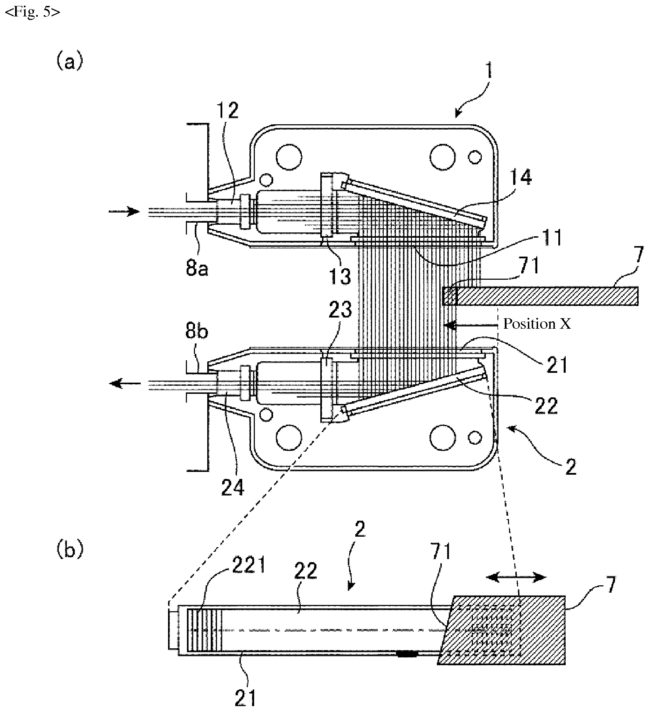

Fig. 5 is a diagram that shows the constitution of the projector 1, optical receiver 2, and shielding plate 7 of the Embodiment 1 of this invention, where (a) is a side view and (b) is a partial top view of the optical receiver 2.
As shown in Fig. 5, projector 1 and optical receiver 2 are provided with windows that have the same shape (projector window 11, light-receiving window 21). The shape of these windows 11, 21 is, as shown in Fig. 5 (b), a rectangle constituted of a given width and a given length greater than said width. Furthermore, the projector window 11 of the projector 1 and the light-receiving window 21 of the optical receiver 2 are placed opposing each other such that they match when viewed from the direction of the light.
The projector 1 is made up of a lens 13 that makes light emitted from the light emitter 4 and guided by a light fiber 8a, from a light fiber output end 12, into parallel light, and a mirror array (deflection means) 14 that changes the parallel light from said lens 13 to an approximately perpendicular direction by means of a plurality of mirrors (deflecting elements) 141 placed in a given cycle and projects the same to the optical receiver 2.

Here, in order to make the depth of the projector 1 small, the mirror array 14 is set such that the installation angle θ1 relative to the overall projector window 11 is smaller than 45°, as in the case of the conventional constitution, and as shown in Fig. 3. Furthermore, the installation angle θ2 of the mirrors 141 used to change the angle of the light among the individual mirrors that constitute the mirror array 14 is made to be 45° relative to the parallel light from the lens 13. In addition, each of the mirrors 141 placed in a given cycle is placed approximately parallel to the width direction of the projector window 11.

In addition, the optical receiver 2 is made up of a mirror array (deflection means) 22 that changes the parallel light received from the projector 1 via the light-receiving window 21 to an approximately perpendicular direction by means of a plurality of mirrors (deflecting elements) 221 placed in a given cycle, and a lens 23 that focuses the parallel light from the mirror array 22 onto the light fiber incident end 24.

Here, in order to make the depth of the optical receiver 2 small, the mirror array 22 is set such that, like with projector 1, the installation angle θ1 relative to the overall light-receiving window 21 is smaller than 45°. Furthermore, the installation angle θ2 of the mirrors 221 used to change the angle of the light among the individual mirrors that constitute the mirror array 22 is made to be 45° relative to the parallel light from the projector 1. In addition, each of the mirrors 221 placed at a given cycle is placed approximately parallel to the width direction of the light-receiving window 21 (see Fig. 5 (b)).

In addition, the light emitter 4 guides light from a light source such as LED using light fiber 8a. In addition, the light intensity detector 5 receives light focused onto light fiber 8b and guided with the optical receiver 2, and outputs a value proportional to the intensity of that light as the position signal.

As shown in Fig. 5, shielding plate 7 has a surface that is approximately perpendicular to the parallel light and has a larger width than the width of the windows 11, 21, and is also held in a horizontally mobile manner in the length direction (x-direction) of the windows 11, 21. In addition, the edge line 71 of the shielding plate 7 is inclined relative to the width direction of the windows 11, 21. The positional relationship between this edge line 71 of the shielding plate 7 and the mirror arrays 14, 22 will be described later.

Furthermore, the shielding plate 7 moves horizontally according to the position of the subject of measurement, and shields part of or all of the parallel light that enters the light-receiving window 21. From the point at which the shielding plate 7 reaches one end of the light-receiving window 21 (right edge of Fig. 5 (b)) and starts shielding the parallel light, to the point at which the shielding plate 7 reaches the other end of the light-receiving window 21 (left edge of Fig. 5 (b)) and shields all of the parallel light, the intensity of light that reaches the light intensity detector 5 changes from the maximum to zero.

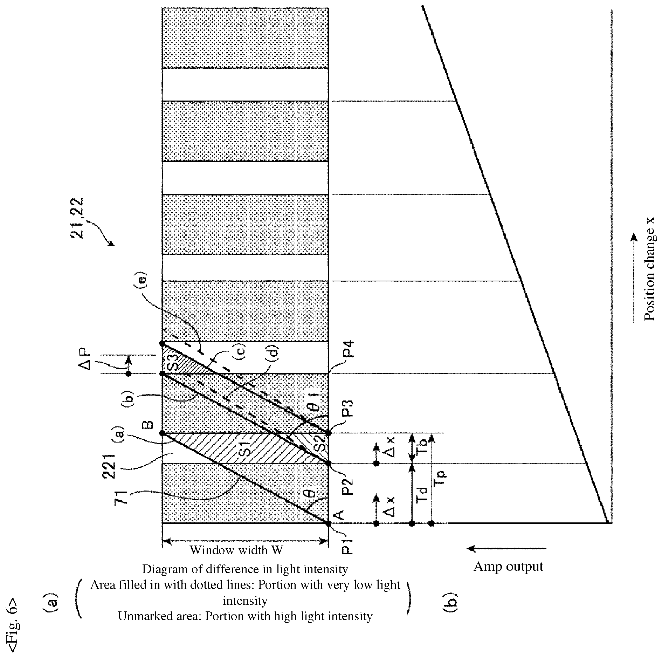

Next, the positional relationship of the edge line 71 of the shielding plate 7 and the mirror arrays 14, 22 will be explained while referring to Fig. 6. Fig. 6 (a) shows the mirror array 22 viewed from an approximately perpendicular direction relative to the light-receiving window 21. The mirror array 14 is constituted similarly. Here, the area of the mirror 221 filled in with dotted lines is the portion with very low light intensity, and the unmarked area is the portion with high light intensity. When the shielding plate 7 moves and light hits said area, the total amount of light received increases proportionally to the area of the same and the light intensity. In addition, Fig. 6 (b) is a diagram showing the output of amp unit 6 (amp output) relative to changes in the position of the shielding plate 7.

Here, in order to make the depths of the projector 1 and optical receiver 2 small as described above, portion with the mirrors 141, 221 used to reflect light among the individual mirrors that make up the mirror arrays 14, 22 are less than half of the total area. Therefore, as shown in Fig. 6 (a), in the light projected to the optical receiver 2 in an approximately perpendicular manner, there exists an area Tb with high light intensity (P2 to P3) and an area Td with very low light intensity (P1 to P2), and this is repeated at a given cycle interval Tp.

Therefore, when the edge line 71 of the shielding plate 7 is made to be approximately parallel to the width direction of the windows 11, 21, as in the conventional constitution, the output of the amp unit 6 changes in a step-wise manner, even if this shielding plate 7 is moved linearly in the length direction of the windows 11, 21.

Therefore, in the present invention, the edge line 71 of the shielding plate 7 is inclined such that it is approximately parallel to a line segment that connects the starting point of a placement cycle of given mirrors 141, 221 at one end in the width direction of the windows 11, 21 and the ending point of the placement cycle of given mirrors 141, 221 at the other end in the width direction of the windows 11, 21, when viewing the mirror arrays 14, 22 from a direction approximately perpendicular to the windows 11, 21. The example in Fig. 6 shows a case in which the edge line 71 of the shielding plate 7 is inclined such that it is approximately parallel to a line segment AB that connects the starting point (A) of a placement cycle at the bottom end of window 21 at a mirror 221 on the left end and the ending point (B) at the top end of the window 22.

In Fig. 6, a case is considered in which the edge line 71 of the shielding plate 7 moved from (a) to (b).

In this case, the amount of increase in light intensity in the optical receiver 2 is Area S1, and Area S1 is expressed as Equation (1), where the distance travelled by the edge line 71 of the shielding plate 7 from P1 is Δx. Therefore, the distance travelled by the shielding plate 7 and the increase in light intensity in the optical receiver 2 (in other words, the output of amp unit 6) are proportional.

$$S1 = Tb \cdot \tan\theta \cdot \Delta x \quad (\Delta x: 0 \rightarrow Td) \quad (1)$$

Next, a case is considered in which the edge line 71 of the shielding plate 7 moved from (b) to (c).

With the distance travelled by the edge line 71 of the shielding plate 7 from P2 expressed as $\Delta x$, Area S2 of the area to the left of P3 among the amount of increase in light intensity in the optical receiver 2 is expressed as Equation (2). Therefore, with respect to Area S2, the distance travelled by the shielding plate 7 and the increase in light intensity in the optical receiver 2 are not proportional.

$$S2 = (1/2) \cdot \tan\theta \cdot (2 \cdot Tb \cdot \Delta x - \Delta x^2) \quad (\Delta x: 0 \rightarrow Tb) \quad (2)$$

In addition, among the amount of increase in light intensity in the optical receiver 2, Area S3 of the area to the right of P4 is expressed as Equation (3). Therefore, with respect to Area S3 as well, the distance travelled by the shielding plate 7 and the increase in light intensity in the optical receiver 2 are not proportional.

$$S3 = (1/2) \cdot \tan\theta \cdot \Delta x^2 \quad (\Delta x: 0 \rightarrow Tb) \quad (3)$$

However, the increase in light intensity in the optical receiver 2 when the edge line 71 of the shielding plate 7 moves from (b) to (c) is equal to the sum of Area S2 and Area S3, and furthermore, Area S2 + S3 is expressed as Equation (4). Therefore, the distance travelled by the shielding plate 7 and the increase in light intensity in the optical receiver 2 are proportional, and the rate of change of the same is equal to the value (Equation (1)) when the edge line 71 of the shielding plate 7 moved from (a) to (b).

$$S2 + S3 = (1/2) \cdot \tan\theta \cdot (2 \cdot Tb \cdot \Delta x - \Delta x^2) + (1/2) \cdot \tan\theta \cdot \Delta x^2 = Tb \cdot \tan\theta \cdot \Delta x \quad (\Delta x: 0 \rightarrow Tb) \quad (4)$$

This means that the distance travelled by the shielding plate 7 and the increase in light intensity in the optical receiver 2 (in other words, the output of amp unit 6) are always proportional, even if the parallel light projected into the light-receiving window 21 in an approximately perpendicular manner has areas with high light intensity and areas with very low light intensity. Therefore, with the depths of the projector 1 and optical receiver 2 kept small, the same effect is achieved as when a position detector is used in which the intensity of parallel light projected into the light-receiving window 21 is uniform.

Meanwhile, a case is assumed in which the edge line 71 of the shielding plate 7 moves from (d) to (e), in a state in which the inclination of the edge line 71 of the shielding plate 7 is made a little smaller ($\theta1$), as shown with the dotted line (d) in Fig. 6 (a), and the top end point is displaced from (b) by the amount $\Delta P$.

With the distance travelled by the edge line 71 of the shielding plate 7 from P2 expressed as $\Delta x$, Area S2 of the area to the left of P3 among the amount of increase in light intensity in the optical receiver 2 is expressed as Equation (5), and Area S3 of the area to the right of P4 is expressed as Equation (6). Furthermore, the increase in light intensity in the optical receiver 2 when the edge line 71 of the shielding plate 7 moves from (b) to (c) is equal to the sum of Area S2 and Area S3, and is expressed as Equation (7). Therefore, the distance travelled by the shielding plate 7 and the increase in light intensity in the optical receiver 2 are not proportional.

$$S2 = (1/2) \cdot \tan\theta \cdot (2 \cdot Tb \cdot \Delta x - \Delta x^2) \quad (\Delta x: 0 \rightarrow Tb) \quad (5)$$

$$S3 = (1/2) \cdot \tan\theta \cdot (\Delta x - \Delta P)^2 \quad (\Delta x: 0 \rightarrow Tb) \quad (6)$$

$$S2 + S3 = Tb \cdot \tan\theta \cdot \Delta x - 2 \cdot \Delta x \cdot \Delta P + \cdot \Delta P^2 \quad (\Delta x: 0 \rightarrow Tb) \quad (7)$$

Therefore, from Equation (4) and Equation (7), it is evident that setting the edge line 71 of the shielding plate 7 to be approximately parallel to a line segment that connects the starting point of a placement cycle of given mirrors 141, 221 at one end in the width direction of the windows 11, 21 and the ending point of the placement cycle of given mirrors 141, 221 at the other end in the width direction of the windows 11, 21, when viewing the mirror arrays 14, 22 from a direction approximately perpendicular to the windows 11, 21, is the optimal condition for establishing a proportional relationship between the distance travelled by the shielding plate 7 and the light intensity in the optical receiver 2.

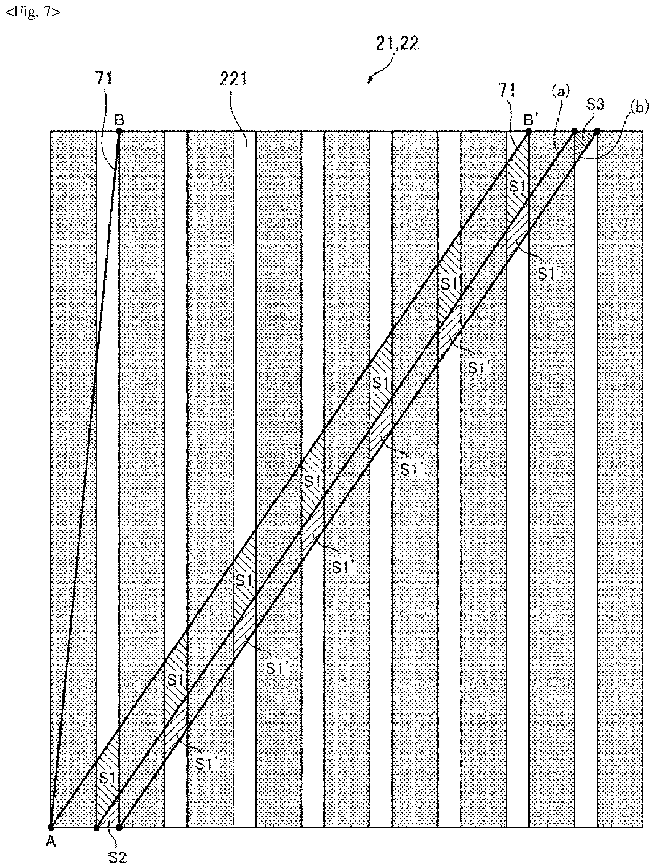

Next, a case is explained in which, as shown in Fig. 7, the edge line 71 of the shielding plate 7 is set to be approximately parallel to a line segment AB' that connects the starting point (A) of a placement cycle at the first mirror 221 on the left at the bottom end of the window 22 and the ending point (B') of a placement cycle at the seventh mirror 221 from the left at the top end of the window 22. When the edge line 71 of the shielding plate 7 is moves from (a) to (b) under these conditions, the increase in light intensity in the optical receiver 2 is expressed as Equation (8).

$$6 \times S1' + S2 + S3 \quad (8)$$

In Equation (8), S1' is a member that is proportional to the change in position of the shielding plate 7, and as explained in the exampled in Fig. 6, the member (S2 + S3) is also proportional if the positional relationship between the end point of the shielding plate 7 and the mirror array 14 satisfies the optimal conditions noted above.

Furthermore, if the optimal conditions noted above are satisfied, then as is evident in Fig. 7, Area (S2 + S3) is equal to Area S1', and the increase in the optical receiver 2, from Equation (8), is seven times greater than Area S1' and proportional to the change in position.

In addition, if the inclination angle $\theta$ of the edge line 71 of the shielding plate 7 is small, then even if the inclination angle $\theta$ of the edge line 71 of the shielding plate 7 is slightly off from the optimal conditions noted above and the member (S2 + S3) in Equation (8) is no longer proportional to the change in position of the shielding plate 7, the effect on the resolution of the position detector is smaller than when the inclination angle $\theta$ of the edge line 71 of the shielding plate 7 is large.

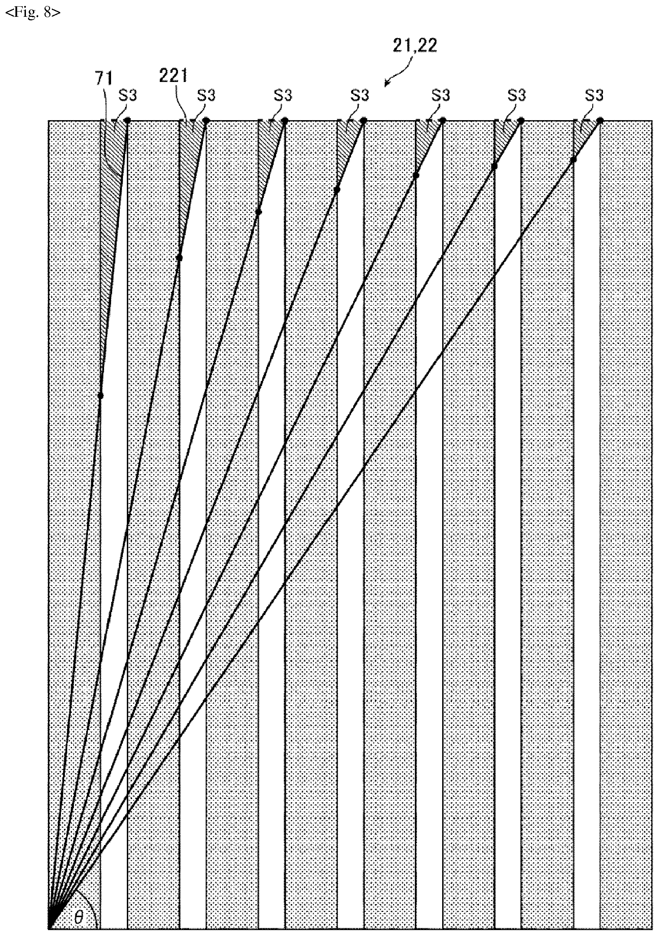

Fig. 8 is a diagram that expresses changes in the area of S3 in cases in which the inclination angle $\theta$ of the edge line 71 of the shielding plate 7 is changed among the optimal conditions noted above. It is evident that the smaller the inclination angle $\theta$ of the edge line 71 of the shielding plate 7 is made to be, the more the area of S3 decreases, and the less susceptible it is to the effects of error, as shown in this Fig. 8.

Meanwhile, when the inclination angle $\theta$ of the edge line 71 of the shielding plate 7 is made to be small, linearity becomes poor at both ends in the length direction of the light-receiving window 21, and the range of effectiveness as a position detector decreases. Therefore, the most effective method is to avoid making the inclination angle $\theta$ smaller than necessary and improve the resolution by adapting the principle of this invention.

As described above, according to this Embodiment 1, the constitution is such that the edge line 71 of the shielding plate 7 is set to be approximately parallel to a line segment that connects the starting point of a placement cycle of given mirrors 141, 221 at one end in the width direction of the windows 11, 21 and the ending point of the placement cycle of given mirrors 141, 221 at the other end in the width direction of the windows 11, 21, when viewing the mirror arrays 14, 22 from a direction approximately perpendicular to the windows 11, 21, so it is possible to make the cumulative change in light intensity resulting from movement of the shielding plate 7 in the length direction of the windows 11, 21 proportional to the distance travelled by the shielding plate 7, even if the parallel light projected into the light-receiving window 21 has areas with high light intensity and areas with very low light intensity, and an effect is achieved that is the same as when the intensity of parallel light projected into the light-receiving window 21 in an approximately perpendicular manner appears to be uniform.

Embodiment 2

Embodiment 1 shows a case in which the mirrors 141, 221 of the mirror arrays 14, 22 are made to be approximately parallel to the width direction of the windows 11, 21, and the edge line 71 of the shielding plate 7 is inclined relative to the width direction of the windows 11, 21. In contrast, in Embodiment 2, a case is explained in which the edge line 71 of the shielding plate 7 is made to be approximately parallel to the width direction of the windows 11, 21, and the mirrors 141, 221 of the mirror arrays 14, 22 are inclined relative to the width direction of the windows 11, 21.

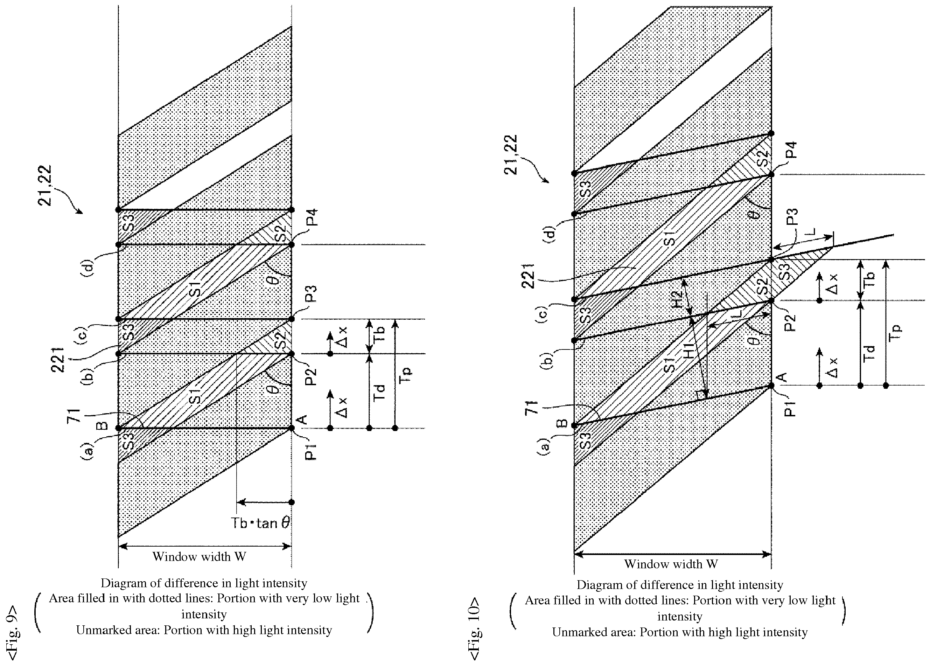

Fig. 9 is a diagram that shows the positional relationship between the mirror arrays 14, 22 and the edge line 71 of the shielding plate 7 in a position detector according to Embodiment 2 of this invention.

As shown in Fig. 9, the edge line 71 of the shielding plate 7 is constituted such that it is approximately parallel to width direction of the windows 14, 22. Meanwhile, the mirrors 141, 221 of the mirror arrays 14, 22 are constituted to be inclined relative to the width direction of the windows 11, 21 such that they satisfy the optimal conditions shown in Embodiment 1 (condition in which the edge line 71 of the shielding plate 7 is approximately parallel to a line segment that connects the starting point of a placement cycle of given mirrors 141, 221 at one end in the width direction of the windows 11, 21 and the ending point of the placement cycle of given mirrors 141, 221 at the other end in the width direction of the windows 11, 21, when viewing the mirror arrays 14, 22 from a direction approximately perpendicular to the windows 11, 21). The example in Fig. 9 shows a case in which the mirrors 141, 221 are inclined such that the edge line 71 of the shielding plate 7 is approximately parallel to a line segment AB that connects the starting point (A) of a placement cycle at the bottom end of the window 21 at the mirror 221 on the left end, and the ending point (B) at the top end of the window 22.

In Fig. 9, a case is considered in which the edge line 71 of the shielding plate 7 moved from (a) to (b).

In this case, the amount of increase in light intensity in the optical receiver 2 becomes equal to Area S1, and Area S1 is expressed as Equation (9), where the distance travelled by the edge line 71 of the shielding plate 7 from P1 is $\Delta x$. Therefore, the distance travelled by the shielding plate 7 and the increase in light intensity in the optical receiver 2 are proportional.

$$S1 = Tb \cdot \tan \theta \cdot \Delta x \ (\Delta x: 0 \rightarrow Td) \ (9)$$

Next, a case is considered in which the edge line 71 of the shielding plate 7 moved from (b) to (c).

With the distance travelled by the edge line 71 of the shielding plate 7 from P2 expressed as $\Delta x$, Area S2+S3, which is the amount of increase in light intensity in the optical receiver 2, is a square, and the height of the same is Tb $\cdot \tan \theta$, so is expressed as Equation (10). Therefore, the distance travelled by the shielding plate 7 and the increase in light intensity are proportional, and the rate of change of the same is equal to the value (Equation (9)) when the edge line 71 of the shielding plate 7 moved from (a) to (b).

$$S2 + S3 = Tb \cdot \tan \theta \cdot \Delta x \ (\Delta x: 0 \rightarrow Tb) \ (10)$$

As described above, according to this Embodiment 2, the same effect as in Embodiment 1 can be achieved, even when the constitution is made to be such that the edge line 71 of the shielding plate 7 is approximately parallel to the width direction of the windows 14, 22, and the mirrors 141, 221 of the mirror arrays 14, 22 are inclined relative to the width direction of the windows 11, 21 such that they satisfy the optimal conditions noted above. In addition, if the edge line 71 of the shielding plate 7 is made to be approximately parallel to the width direction of the projector window 11, the user can use the position detector similarly to a conventional edge sensor without keeping any particular difference in mind.

Embodiment 3

Embodiments 1 and 2 show cases in which among the mirrors 141, 221 of the mirror arrays 14, 22 and the edge line 71 of the shielding plate 7, one is made to be approximately parallel to the width direction of the windows 11, 21, and the other is inclined. In contrast, in Embodiment 3, a case is explained in which both the mirrors 141, 221 of the mirror arrays 14, 22 and the edge line 71 of the shielding plate 7 are inclined relative to the width direction of the windows 11, 21.

Fig. 10 is a diagram that shows the positional relationship between the mirror array 14 and the edge line 71 of the shielding plate 7 in a position detector according to Embodiment 3 of this invention.

As shown in Fig.10, the edge line 71 of the shielding plate 7 and the mirrors 141, 221 of the mirror arrays 14, 22 are constituted to be inclined relative to the width direction of the windows 11, 21 such that they satisfy the optimal conditions shown in Embodiment 1 (condition in which the edge line 71 of the shielding plate 7 is approximately parallel to a line segment that connects the starting point of a placement cycle of given mirrors 141, 221 at one end in the width direction of the windows 11, 21 and the ending point of the placement cycle of given mirrors 141, 221 at the other end in the width direction of the windows 11, 21, when viewing the mirror arrays 14, 22 from a direction approximately perpendicular to the windows 11, 21). The example in Fig. 10 shows a case in which the mirrors 141, 221 and the edge line 71 of the shielding plate 7 are inclined such that the edge line 71 of the shielding plate 7 is approximately parallel to a line segment AB that connects the starting point (A) of a placement cycle at the bottom end of the window 21 at the mirror 221 on the left end, and the ending point (B) at the top end of the window 21.

In Fig. 10, a case is considered in which the edge line 71 of the shielding plate 7 moved from (a) to (b).

Here, the amount of increase in light intensity in the optical receiver 2 is equal to Area S1, with the length of the base of the parallelogram of Area S1 as L and the height as H1, Area S1 is expressed as Equation (11).

$$S1 = H1 \cdot L \quad (11)$$

Next, a case is considered in which the edge line 71 of the shielding plate 7 moved from (b) to (c).

Here, Area S2+S3, which is the amount of increase in light intensity in the optical receiver 2, is an approximate parallelogram, and with the height of the same as H2, the length of the base of the same is L, as in the case of the parallelogram of Area S1, so is expressed as Equation (12).

$$S2 + S3 = H2 \cdot L \quad (12)$$

Here, when focusing on the aforementioned parallelogram S1 and the shape of S2 + S3, as shown in the figure, the length of the base is the same for both, i.e., L, so the amounts of change in light intensity and the distance travelled by the shielding plate 7 in the case in which the shielding plate 7 moved by the amount $\Delta x$ starting from P1 and in the case in which it moved by the amount $\Delta x$ starting from P2 are proportional, as in the case of Embodiments 1 and 2.

As described above, according to this Embodiment 3, the same effect as in Embodiment 1 can be achieved, even when the constitution is made to be such both the edge line 71 of the shielding plate 7 and the mirrors 141, 221 of the mirror arrays 14, 22 are inclined relative to the width direction of the windows 11, 21 such that they satisfy the optimal conditions noted above.

Embodiments 1 through 3 show cases in which mirror arrays 14, 22 were provided on both the projector 1 and optical receiver 2, but it is also fine to provide them on only one of them.

In addition, Embodiments 1 through 3 show cases in which mirror arrays 14, 22 were used as the deflection means, but this invention is not limited to the above, and it is fine to use a prism array.

In addition, with the inventions in this application, it is possible, within the scope of the present invention, to freely combine the embodiments, or transform arbitrary components of the embodiments, or omit arbitrary components of the embodiments.

Industrial Applicability

The position detector of this invention is constituted such that the edge line of the shielding plate is approximately parallel to a line segment that connects the starting point of a placement cycle of a given deflection element at one end in the width direction of the window and the ending point of the placement cycle of a given deflection element at the other end in the width direction of the window, when viewing the deflection means from a direction approximately perpendicular to the window, and therefore, even if the parallel light projected into the light-receiving window has areas with high light intensity and areas with very low light intensity, the same effect is achieved as in cases in which the intensity of parallel light projected into the light-receiving window appears to be uniform, and the invention is suitable for use in position detectors of actuators and the like.

Explanation of References

| 1: | Projector |
| 2: | Optical receiver |
| 3: | Fiber unit |
| 4: | Light emitter |
| 5: | Light intensity detector |
| 6: | Amp unit |
| 7: | Shielding plate |
| 8a, 8b: | Light fibers |
| 11: | Projector window |
| 12: | Light fiber output end |
| 13: | Lens |
| 14: | Mirror array (deflection means) |
| 21: | Light-receiving window |
| 22: | Mirror array (deflection means) |
| 23: | Lens |

24: Light fiber incident end
71: Edge line
141: Mirror (deflecting element)
221: Mirror (deflecting element)

## Claims

1. A position detector comprising:

   a projector (1) having a window with a given width and a given length greater than said width, and which is adapted to project parallel light of a given width from said window;
   an optical receiver (2) having a window with said given width and said given length, and which is adapted to receive said parallel light by means of said window,
   a shielding plate (7) held in a horizontally mobile manner in the length direction of said window, and which is adapted to shield all or a part of the parallel light that enters the window of said optical receiver (2) depending on the position of the subject of measurement;
   a light intensity detector (5) adapted to output position signals with magnitude proportional to the intensity of light received by said optical receiver (2); and
   a deflection means (14, 22) provided opposite said window of at least one of said projector (1) and said optical receiver (2), and which is adapted to deflect the direction of said parallel light to an approximately perpendicular direction relative to said window by means of a plurality of deflecting elements (141, 221) positioned in a given placement cycle, **characterised in that** the edge line of said shielding plate (7) is approximately parallel to a line segment that connects the starting point of a placement cycle of the given deflection element at one end in the width direction of said window and the ending point of the placement cycle of given deflection element at the other end in the width direction of the window, when viewing said deflection means (14, 22) from a direction approximately perpendicular to said window.

2. The position detector according to Claim 1, **characterized in that**
   the deflecting elements (141, 221) of said deflection means (14, 22) are approximately parallel to said width direction of the window.

3. The position detector according to Claim 1, **characterized in that**
   the edge line of said shielding plate (7) is approximately parallel to said width direction of the window.

4. The position detector according to Claim 1, **characterized in that**
   said deflection means (14, 22) is a mirror array.

5. The position detector according to Claim 1, **characterized in that**
   said deflection means (14, 22) is a prism array.

## Patentansprüche

1. Positionsdetektor, umfassend:

   einen Projektor (1) mit einem Fenster mit einer bestimmten Breite und einer bestimmten Länge, die größer als die Breite ist, und ausgelegt, um paralleles Licht mit einer bestimmten Breite von dem Fenster zu projizieren;
   einen optischen Empfänger (2) mit einem Fenster mit der bestimmten Breite und der bestimmten Länge, und ausgelegt, um das parallele Licht mit Hilfe des Fensters aufzunehmen,
   eine Abschirmplatte (7), die auf eine horizontale bewegliche Weise in der Längsrichtung des Fensters gehalten wird, und ausgelegt, um die Gesamtheit oder einen Teil des parallelen Lichts, das in das Fenster des optischen Empfängers (2) eintritt, je nach der Position des Messgegenstands abzuschirmen;
   einen Lichtintensitätsdetektor (5), ausgelegt, um Positionssignale mit einer Größe auszugeben, die proportional zur Intensität des Lichts ist, das von dem optischen Empfänger (2) empfangen wird; und
   ein Ablenkungsmittel (14, 22), das gegenüber dem Fenster von mindestens einem des Projektors (1) und des optischen Empfängers (2) bereitgestellt ist, und das ausgelegt ist, um die Richtung des parallelen Lichts in einer ungefähr senkrechten Richtung mit Bezug auf das Fenster mit Hilfe einer Vielzahl von Ablenkungselementen (141, 221) abzulenken, die in einem bestimmten Anordnungszyklus positioniert sind,
**dadurch gekennzeichnet, dass** die Kantenlinie der Abschirmplatte (7) ungefähr parallel zu einem Liniensegment ist, das den Ausgangspunkt eines Anordnungszyklus des bestimmten Ablenkungselements an einem Ende in der Breitenrichtung des Fensters und den Endpunkt des Anordnungszyklus des bestimmten Ablenkungselements am anderen Ende in der Breitenrichtung des Fensters verbindet, wenn das Ablenkungsmittel (14, 22) aus einer Richtung ungefähr senkrecht zu dem Fenster betrachtet wird.

2. Positionsdetektor nach Anspruch 1, **dadurch gekennzeichnet, dass** die Ablenkungselemente (141, 221) des Ablenkungsmittels (14, 22) ungefähr parallel zu der Breitenrichtung des Fensters sind.

3. Positionsdetektor nach Anspruch 1, **dadurch gekennzeichnet, dass** die Kantenlinie der Abschirmplatte (7) ungefähr parallel zu der Breitenrichtung des Fensters ist.

4. Positionsdetektor nach Anspruch 1, **dadurch gekennzeichnet, dass** das Ablenkungsmittel (14, 22) eine Spiegelanordnung ist.

5. Positionsdetektor nach Anspruch 1, **dadurch gekennzeichnet, dass** das Ablenkungsmittel (14, 22) eine Prismenanordnung ist.

**Revendications**

1. Détecteur de position comprenant :

un projecteur (1) ayant une fenêtre d'une largeur donnée et d'une longueur donnée supérieure à ladite largeur, et qui est adapté pour projeter une lumière parallèle d'une largeur donnée depuis ladite fenêtre ;
un récepteur optique (2) ayant une fenêtre de ladite largeur donnée et de ladite longueur donnée, et qui est adapté pour recevoir ladite lumière parallèle au moyen de ladite fenêtre,
une plaque de protection (7) maintenue de manière mobile à l'horizontale dans le sens longitudinal de ladite fenêtre, et qui est adaptée pour protéger la totalité ou une partie de la lumière parallèle qui pénètre dans la fenêtre dudit récepteur optique (2) selon la position du sujet de mesure ;
un détecteur d'intensité lumineuse (5) adapté pour produire en sortie des signaux de position d'une amplitude proportionnelle à l'intensité de la lumière reçue par ledit récepteur optique (2) ; et
un moyen de déviation (14, 22) prévu à l'opposé de ladite fenêtre d'au moins l'un dudit projecteur (1) et dudit récepteur optique (2), et qui est adapté pour dévier le sens de ladite lumière parallèle vers un sens approximativement perpendiculaire par rapport à ladite fenêtre au moyen d'une pluralité d'éléments de déviation (141, 221) positionnés dans un cycle de placement donné,
**caractérisé en ce que**
le contour de ladite plaque de protection (7) est approximativement parallèle à un segment linéaire qui relie le point de départ d'un cycle de placement de l'élément de déviation donné à une extrémité dans le sens transversal de ladite fenêtre et le point d'arrivée du cycle de placement de l'élément de déviation donné à l'autre extrémité dans le sens transversal de la fenêtre, lorsqu'on regarde ledit moyen de déviation (14, 22) depuis une direction approximativement perpendiculaire à ladite fenêtre.

2. Détecteur de position selon la revendication 1, **caractérisé en ce que**
les éléments de déviation (141, 221) dudit moyen de déviation (14, 22) sont approximativement parallèles audit sens transversal de la fenêtre.

3. Détecteur de position selon la revendication 1, **caractérisé en ce que**
le contour de ladite plaque de protection (7) est approximativement parallèle audit sens transversal de la fenêtre.

4. Détecteur de position selon la revendication 1, **caractérisé en ce que**
ledit moyen de déviation (14, 22) est un réseau de miroirs.

5. Détecteur de position selon la revendication 1, **caractérisé en ce que**
ledit moyen de déviation (14, 22) est un réseau de prismes.

<Fig. 1>

<Fig. 2>

<Fig. 3>

<Fig. 4>

<Fig. 5>

(a)

(b)

Position X

<Fig. 6>

(a)

(b)

<Fig. 7>

<Fig. 8>

<Fig. 9>

<Fig. 10>

**EP 2 963 379 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H6258139 B

- US 3791607 A